# EUROPÄISCHE PATENTSCHRIFT

(11) **EP 1 213 687 B1**
(45) Veröffentlichungstag und Bekanntmachung des Hinweises auf die Patenterteilung: **25.03.2009**
(21) Anmeldenummer: 01128938.6
(22) Anmeldetag: 05.12.2001
(51) Int. Cl.: G07C 9/00

(54) **Anordnung für ein Fernbedienungssystem an Kraftfahrzeugen**
Arrangement for remote control system for motor vehicles
Agencement pour système de télécommande pour véhicules

(30) Priorität: 05.12.2000 DE 10060431
(43) Veröffentlichungstag der Anmeldung: 12.06.2002
(73) Patentinhaber: Delphi Technologies, Inc., Troy, MI 48007 (US)
(72) Erfinder: Klütz, Siegfried, 51580 Brüchermühle (DE); Rampino, Sergio, 51588 Nümbrecht (DE)
(74) Vertreter: Denton, Michael John

(56) Entgegenhaltungen:
- EP-A- 0 482 965
- EP-A- 0 800 094
- EP-A- 0 848 123
- DE-A- 19 835 155
- US-A- 5 134 392

## Beschreibung

Die Erfindung betrifft eine Anordnung für ein Fernbedienungssystem, insbesondere schlüsselloses Zugangssystem, für Kraftfahrzeuge, mit zumindest einer Sendeeinheit und wenigstens einer Empfangseinheit, die zur drahtlosen Kommunikation mit einem mobilen Sende-/Empfangsteil ausgebildet sind.

Fernbedienungssysteme wie z.B. schlüssellose Zugangssysteme für Kraftfahrzeuge sind grundsätzlich bekannt. Beispielsweise wird in der EP 0 800 094 A1 ein Fernbedienungssystem mit den Merkmalen des Oberbegriffs des Anspruchs 1 beschrieben. Fahrzeugseitig ist der komplizierte Aufbau der bekannten Systeme problematisch. Es muß auch neben der Versorgung der Sendeeinheit und der Empfangseinheit außerdem für die Übertragung von Sendesignalen und Empfangssignalen an entsprechende Steuereinrichtungen gesorgt werden.

Es ist das der Erfindung zugrundeliegende Problem (Aufgabe), eine Anordnung für ein Fernbedienungssystem der eingangs genannten Art zu schaffen, das bei zuverlässiger Funktionsweise möglichst einfach aufgebaut ist.

Die Lösung dieser Aufgabe erfolgt durch die Merkmale des Anspruchs 1 und insbesondere dadurch, daß die Empfangseinheit einen Näherungssensor umfasst.

Erfindungsgemäß sind die Sendeeinheit und die Empfangseinheit zu einer Kommunikationseinheit zusammengefaßt. Hierdurch wird die Möglichkeit zur gemeinsamen Nutzung von Bauteilen sowie zur Vereinfachung der Versorgung und Signalübertragung eröffnet. Außerdem können die Sendeeinheit und die Empfangseinheit in einem gemeinsamen Gehäuse untergebracht werden, wodurch eine kompakte Kommunikationseinheit mit geringen Abmessungen und somit minimalem Platzbedarf geschaffen werden kann, die an grundsätzlich beliebigen Stellen eines Kraftfahrzeuges auch bei beengten Platzverhältnissen angeordnet werden kann. Der Aufbau insbesondere eines schlüssellosen Zugangssystems wird erfindungsgemäß ferner dadurch vereinfacht, daß zum einen eine gemeinsame Steuereinheit für die Kommunikationseinheit und damit für den Sender und den Empfänger vorgesehen ist. Zum anderen ist erfindungsgemäß ein Signal- und Versorgungspfad zwischen der zentralen Steuereinheit und der Kommunikationseinheit vorgesehen, welcher derart ausgebildet ist, daß über ihn nicht nur der Sendeeinheit die jeweiligen Sendesignale zugeführt und von der Empfangseinheit empfangene Signale an die gemeinsame Steuereinheit weitergeleitet werden können. Vielmehr ist die Verbindung erfindungsgemäß außerdem in der Lage, gleichzeitig die Spannungsversorgung der Kommunikationseinheit und damit des Senders und des Empfängers sicherzustellen. Durch diese erfindungsgemäße Mehrzweckleitung und die Zusammenfassung des Senders und Empfängers zu einer Kommunikationseinheit wird auf einfache Weise ein hoher Integrationsgrad für die das Fernbedienungs- bzw. Zugangssystem bildenden Komponenten erzielt. Der Signal- und Versorgungspfad kann dabei die einzige erforderliche Verbindung zwischen der Steuereinheit und der Kommunikationseinheit sein.

In einer besonders bevorzugten praktischen Ausführung der Erfindung ist vorgesehen, daß der Signal- und Versorgungspfad von einem einzigen Paar elektrischer Leitungen gebildet wird.

Vorzugsweise handelt es sich bei dem Leitungspaar um eine verdrillte Doppelleitung, die auch als twisted pair oder twisted pair-Leitung bezeichnet wird.

Eine weitere praktische Ausgestaltung der Erfindung schlägt vor, daß die Sendeeinheit eine Antenne umfaßt, die insbesondere als eine Ferritantenne ausgebildet ist.

Des weiteren ist vorzugsweise vorgesehen, daß die Empfangseinheit einen Näherungssensor umfaßt.

In einem besonders bevorzugten Ausführungsbeispiel ist eine Antenne der Sendeeinheit gleichzeitig als ein Empfangselement und insbesondere als Empfangselektrode des Näherungssensors vorgesehen.

Hierdurch wird in vorteilhafter Weise ein Synergieeffekt erzielt, indem ein Bauteil, in diesem Fall die Antenne, ein Bestandteil sowohl der Sendeeinheit als auch der Empfangseinheit ist. Dieses bevorzugte Ausführungsbeispiel zeichnet sich folglich nicht nur durch eine hohen Integrationsgrad der Komponenten, sondern überdies durch die Ausnutzung von Synergieeffekten aus.

Vorzugsweise ist dabei die Antenne an den Eingang des Näherungssensors angeschlossen, der bevorzugt in Form eines integrierten Schaltkreises (IC) vorgesehen ist. Derartige Sensor-ICs sind im Handel erhältlich. Die Erfindung ermöglicht somit insbesondere den Aufbau eines einfachen sowie gleichzeitig kostengünstigen Fernbedienungssystem.

Des weiteren kann gemäß einer bevorzugten Ausgestaltung der Erfindung durch die Integration der Empfangs- oder Näherungssensorelektronik in die Sende- oder Antenneneinheit eine Diagnose des Signal- und Versorgungspfades erfolgen und insbesondere ein Leitungsbruch nachgewiesen werden.

Ferner ist die den Sender und den Empfänger umfassende Kommunikationseinheit vorzugsweise so ausgebildet, daß sie in einer Innenverkleidung, insbesondere einer Tür, und/oder einem Türgriff eines Kraftfahrzeugs untergebracht werden kann. Weitere Unterbringungsmöglichkeiten stellen insbesondere eine Stoßstange, die Armaturentafel, eine Kofferraumverkleidung bzw. der Griff der Kofferraumklappe, die Rücksitze oder der Tunnel des Kraftfahrzeugs dar.

Die Erfindung betrifft außerdem ein Fernbedienungssystem für Kraftfahrzeuge, das wenigstens eine Anordnung gemäß der Erfindung umfaßt, wie sie vorstehend beschrieben worden ist.

Des weiteren betrifft die Erfindung ein Kraftfahrzeug mit einem derartigen Fernbedienungssystem gemäß der Erfindung.

Vorteilhafte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: ein Schaubild zur Erläuterung des Zusammenspiels zwischen einem mobilen Sende-/Empfangsteil und einem Kraftfahrzeug mit einem erfindungsgemäßen Fernbedienungssystem,
- Fig. 2: ein Schaubild zur Erläuterung von Anordnungsmöglichkeiten für Kommunikationseinheiten des erfindungsgemäßen Fernbedienungssystems,
- Fig. 3: eine Ansicht eines Ausführungsbeispiels einer in Verbindung mit der Erfindung einsetzbaren Antenne, und
- Fig. 4: eine Ausführungsform einer Schaltungsanordnung für das erfindungsgemäße Fernbedienungssystem.

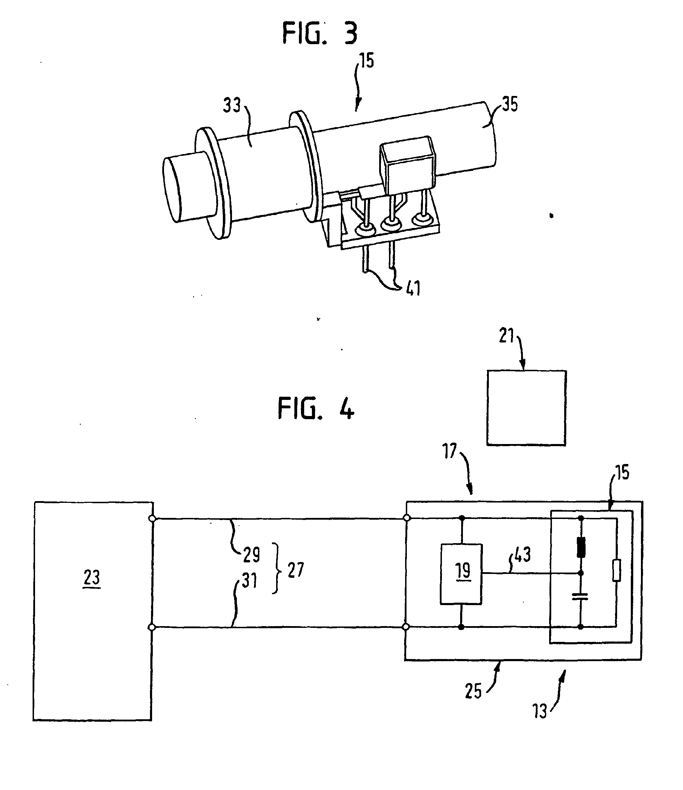

Das erfindungsgemäße Fernbedienungssystem dient als schlüsselloses Zugangssystem und umfaßt ein mobiles Sende-/Empfangsteil 21, das auch als mobiler Transceiver bezeichnet wird und das der Benutzer eines Kraftfahrzeuges 11 bei sich trägt. Der Transceiver 21 wirkt mit einer in das Fahrzeug 11 integrierten Anordnung gemäß der Erfindung zusammen, die im folgenden insbesondere in Verbindung mit Fig. 4 näher beschrieben wird. Beim Zusammenspiel zwischen dem mobilen Transceiver 21 und der fahrzeugfesten Anordnung des Zugangssystems werden zwischen einer im folgenden näher erläuterten Kommunikationseinheit am Fahrzeug und dem Transceiver 21 mittels elektromagnetischer Wellen Signale übertragen, die sich durch bestimmte Frequenzen f1 und f2 auszeichnen. Durch diesen Signalaustausch kann überprüft werden, ob es sich um einen für das jeweilige Fahrzeug 11 berechtigten Transceiver 21 handelt, mit dem beispielsweise das Fahrzeug 11 schlüssellos aus der Ferne geöffnet werden kann und /oder andere fernbetätigbare Fahrzeugfunktionen aktiviert oder deaktiviert werden können. Die zur Signalübertragung vom Fahrzeug zum Transceiver verwendete Frequenz f2 beträgt z. B. 125 kHz. Die Frequenz f1, die zur Signalübertragung vom Transceiver zum Fahrzeug verwendet wird, beträgt beispielsweise 433 MHz.

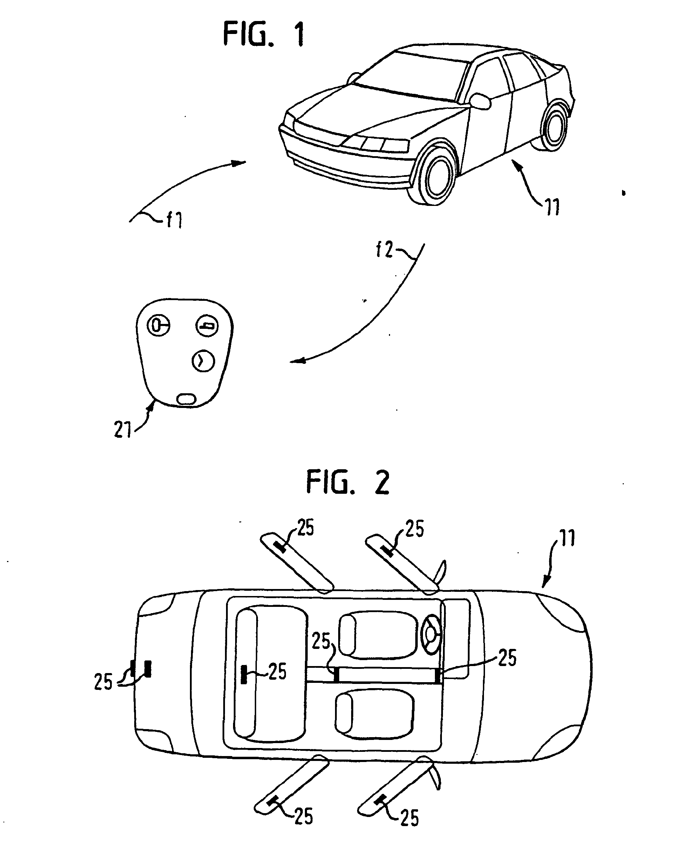

Wie Fig. 2 zeigt, kann das Fahrzeug 11 eine Vielzahl der erwähnten Kommunikationseinheiten umfassen. Diese sind vorzugsweise derart über das Fahrzeug 11 verteilt untergebracht, daß ein sich aus einer beliebigen Richtung dem Fahrzeug 11 nähernder oder an einer beliebigen Stelle im Fahrzeug 11 befindlicher Benutzer zuverlässig mittels des mobilen Sende-/Empfangsteils 21 mit dem Zugangssystem des Fahrzeugs 11 kommunizieren kann.

Fig. 2 zeigt mehrere Beispiele für die Positionierung der Kommunikationseinheiten 25, und zwar an der hinteren Stoßstange, am Kofferraum, am Rücksitz, am Fahrzeugtunnel, an der Armaturentafel oder an den Fahrzeugtüren. Dabei können die Kommunikationseinheiten 25 innerhalb der Türverkleidungen angeordnet werden. Es ist erfindungsgemäß auch möglich, die Kommunikationseinheiten 25 derart kompakt auszugestalten, daß sie in den Türgriffen untergebracht werden können. Nicht dargestellt in Fig. 2 ist eine zentrale, gemeinsame Steuereinheit für die Kommunikationseinheiten 25, die grundsätzlich an einer beliebigen Stelle im Fahrzeug 11 angebracht werden kann. Die Steuereinheit dient zum einen der Spannungsversorgung der Kommunikationseinheiten 25 und stellt außerdem die Signalübertragung zu und von den Kommunikationseinheiten 25 sicher.

Fig. 3 zeigt eine Ferritantenne, wie sie in einem bevorzugten Ausführungsbeispiel der Erfindung, das im folgenden näher anhand von Fig. 4 erläutert wird, zum Einsatz kommt.

Die Antenne 15 umfaßt insbesondere eine gewickelte Spule 33 mit einem Ferritkern 35. Über Kontaktstifte 41 wird die Antenne 15 an die Gesamtanordnung angeschlossen.

Fig. 4 zeigt, daß die Sendeeinheit 13 und die Empfangseinheit 17 zu einer Kommunikationseinheit 25 zusammengefaßt und vorzugsweise in einem gemeinsamen, kompakten Gehäuse angeordnet sind.

Die eine Spule mit Ferritkern sowie einen Trimmkondensator umfassende Antenne 15 ist parallel zu einem in Form eines integrierten Schaltkreises (IC) vorgesehenen Näherungssensor 19 zwischen zwei elektrische Leitungen 29, 31 geschaltet. Als Näherungssensor 19 kann ein handelsüblicher IC-Baustein verwendet werden.

Zur Verbindung der Kommunikationseinheit 25 mit einer Steuereinheit 23 sind die beiden Leitungen 29, 31 in Form einer verdrillten Doppelleitung oder twisted pair-Leitung 27 vorgesehen. Die Doppelleitung 27 erfüllt mehrere Funktionen. Zum einen werden in der Steuereinheit 23 generierte Sendesignale über die Doppelleitung 27 an die Antennenschaltung 15 übermittelt, um Signale an den mobilen Transceiver 21 abzustrahlen. Des weiteren dient die Doppelleitung 27 dazu, digitale Ausgangssignale des Näherungssensors 19, die bei Annäherung einer Person an das Fahrzeug erzeugt werden, an die Steuereinheit 23 zu übertragen. Außerdem dient die Doppelleitung 27 zur Spannungsversorgung der Kommunikationseinheit 25 durch die Steuereinheit 23.

Die twisted pair-Leitung 27 stellt somit eine Mehrzweckverbindung dar, die es gestattet, lediglich einen einzigen Signal- und Versorgungspfad zwischen der Steuereinheit 23 und der Kommunikationseinheit 25 vorzusehen. Die Steuereinheit 23 kann z. B. in einer Türverkleidung angeordnet werden.

Zwischen der Antenne 15 und dem Näherungssensor 19 ist ferner eine Verbindungsleitung 43 vorgesehen, über welche die Antenne 15 an den Eingang des Näherungssensors 19 angeschlossen ist. Somit dient die Antenne 15 nicht nur dazu, Signale abzustrahlen, sondern außerdem gleichzeitig als Empfangselektrode des Näherungssensors 19. Alternativ kann eine separate Empfangselektrode für den Sensor 19 vorgesehen und grundsätzlich an einem beliebigen Ort innerhalb oder außerhalb des die Kommunikationseinheit 25 enthaltenden Gehäuses angeordnet werden.

Auf diese Weise werden durch die Erfindung in dem Ferndedienungssystem ein hoher Integrationsgrad der Komponenten sowie vorteilhafte Synergieeffekte erzielt. Das Fernbedienungssystem kann folglich einfach aufgebaut und kostengünstig hergestellt werden. Ferner wird eine Gewichtsreduzierung erreicht und die Möglichkeit zu einem höheren Miniaturisierungsgrad geschaffen.

### Bezugszeichenliste

- 11: Kraftfahrzeug
- 13: Sendeeinheit
- 15: Antenne
- 17: Empfangseinheit
- 19: Näherungssensor
- 21: mobiles Sende-/Empfangsteil
- 23: Steuereinheit
- 25: Kommunikationseinheit
- 27: Signal- und Versorgungspfad, Leitungspaar
- 29: elektrische Leitung
- 31: elektrische Leitung
- 33: Spule
- 35: Ferritkern
- 41: Kontaktstift
- 43: Verbindungsleitung

## Patentansprüche

1. Anordnung für ein Fernbedienungssystem, insbesondere schlüsselloses Zugangssystem, für Kraftfahrzeuge (11), mit zumindest einer Sendeeinheit (13) und wenigstens einer Empfangseinheit (17), die zur drahtlosen Kommunikation mit einem mobilen Sende/Empfangsteil (21) ausgebildet sind, und mit einer gemeinsamen Steuereinheit (23) für die Sendeeinheit (13) und die Empfangseinheit (17), wobei die Sendeeinheit (13) und die Empfangseinheit (17) zu einer Kommunikationseinheit (25) zusammengefasst sind, die mit der Steuereinheit (23) durch einen Signal- und Versorgungspfad (27) verbunden ist, der zur Übertragung von Sendesignalen an die Kommunikationseihheit (25) und von Empfangssignalen an die Steuereinheit (23) sowie zur Spannungsversorgung der Kommunikationseinheit (25) ausgebildet ist,
**dadurch gekennzeichnet,**
**dass** die Empfangseinheit (17) einen Näherungssensor (19) umfasst.

2. Anordnung nach Anspruch 1,
**dadurch gekennzeichnet,**
**dass** der Signal- und Versorgungspfad (27) von einem einzigen Paar elektrischer Leitungen (29, 31) gebildet ist, die vorzugsweise in Form einer verdrillten Doppelleitung (twisted-pair-Leitung) vorgesehen sind.

3. Anordnung nach Anspruch 1 oder 2,
**dadurch gekennzeichnet,**
**dass** die Sendeeinheit (13) eine Antenne (15) umfasst, insbesondere eine Ferritantenne.

4. Anordnung nach einem der vorhergehenden Ansprüche,
**dadurch gekennzeichnet,**
**dass** wenigstens ein Bauteil (15) der Kommunikationseinheit (25) ein Bestandteil sowohl der Sendeeinheit (13) als auch der Empfangseinheit (17) ist.

5. Anordnung nach einem der vorhergehenden Ansprüche,
**dadurch gekennzeichnet,**
**dass** ein gemeinsames Bauteil der Sendeeinheit (13) und der Empfangseinheit (17) eine Antenne (15) ist.

6. Anordnung nach einem der vorhergehenden Ansprüche,
**dadurch gekennzeichnet,**
**dass** eine Antenne (15) der Sendeeinheit (13) gleichzeitig als ein Empfangselement, insbesondere als eine Empfangselektrode, der Empfangseinheit (17) vorgesehen ist.

7. Anordnung nach Anspruch 6,
**dadurch gekennzeichnet,**
**dass** die Antenne (15) an den Eingang eines Näherungssensors (19) der Empfangseinheit (17) angeschlossen ist.

8. Anordnung nach einem der vorhergehenden Ansprüche,
**dadurch gekennzeichnet,**
**dass** die Kommunikationseinheit (25) zur Diagnose des Signal- und Versorgungspfades (27) und insbesondere zum Nachweis eines Leitungsbruchs ausgebildet ist.

9. Anordnung nach einem der vorhergehenden Ansprüche,
**dadurch gekennzeichnet,**
**dass** die Kommunikationseinheit (25) zur Unterbringung in einer Innenverkleidung, insbesondere einer Tür, und/oder in einem Türgriff eines Kraftfahrzeuges (11) ausgebildet ist.

10. Fernbedienungssystem, insbesondere schlüsselloses Zugangssystem, für Kraftfahrzeuge (11), mit wenigstens einer Anordnung nach einem der vorhergehenden Ansprüche.

11. System nach Anspruch 10,
**dadurch gekennzeichnet,**
**dass** es mehrere Kommunikationseinheiten (25) umfasst, die mit einer gemeinsamen Steuereinheit (23) verbunden sind.

12. Kraftfahrzeug mit einem Fernbedienungssystem nach Anspruch 10 oder 11.

13. Kraftfahrzeug nach Anspruch 12,
**dadurch gekennzeichnet,**
**dass** mehrere über das Kraftfahrzeug (11) verteilt angeordnete Kommunikationseinheiten (25) vorgesehen sind, die mit einer gemeinsamen Steuereinheit (23) verbunden sind.

## Claims

1. Arrangement for a remote control system, in particular a keyless access system, for motor vehicles (11), having at least one transmitting unit (13) and at least one receiving unit (17) which are constructed for wireless communication with a mobile transmitting/receiving part (21), and having a common control unit (23) for the transmitting unit (13) and the receiving unit (17), wherein the transmitting unit (13) and the receiving unit (17) are combined to form one communication unit (25) connected to the control unit (23) by a signal and power supply pathway (27) which is constructed for transmitting transmitted signals to the communications unit (25) and received signals to the control unit (23) and for supplying voltage to the communications unit (25), **characterised in that** the receiving unit (17) comprises a proximity sensor (19).

2. Arrangement according to claim 1, **characterised in that** the signal and power supply pathway (27) is formed by a single pair of electric leads (29, 31) preferably provided in the form of a twisted pair lead.

3. Arrangement according to claim 1 or 2, **characterised in that** the transmitting unit (13) comprises an antenna (15), in particular a ferrite antenna.

4. Arrangement according to any of the preceding claims, **characterised in that** at least one component (15) of the communications unit (25) is a constituent of both the transmitting unit (13) and the receiving unit (17).

5. Arrangement according to any of the preceding claims, **characterised in that** a common component of the transmitting unit (13) and the receiving unit (17) is an antenna (15).

6. Arrangement according to any of the preceding claims, **characterised in that** an antenna (15) of the transmitting unit (13) is simultaneously provided as a receiving unit, in particular as a receiving electrode of the receiving unit (17).

7. Arrangement according to claim 6, **characterised in that** the antenna (15) is connected to the input of a proximity sensor (19) of the receiving unit (17).

8. Arrangement according to any of the preceding claims, **characterised in that** the communications unit (25) is constructed for diagnosing the signal and power supply pathway (27) and in particular for detecting a break in the lead.

9. Arrangement according to any of the preceding claims, **characterised in that** the communications unit (25) is constructed to be accommodated in an inner panelling, in particular of a door and/or in a door handle of a motor vehicle (11).

10. Remote control system, in particular a keyless access system, for motor vehicles (11) having at least one arrangement according to any of the preceding claims.

11. System according to claim 10, **characterised in that** it comprises a plurality of communications units (25) which are connected to a common control unit (23).

12. Motor vehicle having a remote control system according to claims 10 or 11.

13. Motor vehicle according to claim 12, **characterised in that** a plurality of communications units (25) arranged distributed over the motor vehicle (11) are provided that are connected to a common control unit (23).

## Revendications

1. Agencement pour un système de télécommande, en particulier système d'accès sans clé, pour véhicule automobile (11), comprenant au moins une unité émettrice (13) et au moins une unité réceptrice (17), qui sont réalisées pour la communication sans fil avec une partie émettrice/réceptrice mobile (21), et comprenant une unité de commande commune (23) pour l'unité émettrice (13) et pour l'unité réceptrice (17), dans lequel l'unité émettrice (13) et l'unité réceptrice (17) sont regroupées en une unité de communication (25) qui est reliée à l'unité de commande (23) par un trajet de signaux et d'alimentation (27) qui est réalisé pour la transmission de signaux émis vers l'unité de communication (25) et de signaux reçus vers l'unité de commande (23), ainsi que pour l'alimentation en tension de l'unité de communication (25),
**caractérisé en ce que** l'unité réceptrice (17) comprend un capteur de proximité (19).

2. Agencement selon la revendication 1,
**caractérisé en ce que** le trajet de signaux et d'alimentation (27) est formé par une paire unique de lignes électriques (29, 31), qui sont prévues de préférence sous la forme d'une ligne double torsadée (ligne dite "twisted-pair").

3. Agencement selon la revendication 1 ou 2,
**caractérisé en ce que** l'unité émettrice (13) comprend une antenne (15), en particulier une antenne en ferrite.

4. Agencement selon l'une des revendications précédentes,
**caractérisé en ce qu'**un composant au moins (15) de l'unité de communication (25) fait partie aussi bien de l'unité émettrice (13) que de l'unité réceptrice (17).

5. Agencement selon l'une des revendications précédentes,
**caractérisé en ce qu'**un composant commun de l'unité émettrice (13) et de l'unité réceptrice (17) est une antenne (15).

6. Agencement selon l'une des revendications précédentes,
**caractérisé en ce qu'**une antenne (15) de l'unité émettrice (13) est simultanément prévue à titre d'élément récepteur, en particulier à titre d'électrode réceptrice de l'unité réceptrice (17).

7. Agencement selon la revendication 6,
**caractérisé en ce que** l'antenne (15) est raccordée à l'entrée d'un capteur de proximité (19) de l'unité réceptrice (17).

8. Agencement selon l'une des revendications précédentes,
**caractérisé en ce que** l'unité de communication (25) est réalisée pour le diagnostic du trajet de signaux et d'alimentation (27), et en particulier pour la mise en évidence d'une rupture de ligne.

9. Agencement selon l'une des revendications précédentes,
**caractérisé en ce que** l'unité de communication (25) est réalisée pour être logée dans un habillage intérieur, en particulier d'une portière, et/ou dans une poignée de portière d'un véhicule automobile (11).

10. Système de télécommande, en particulier système d'accès sans clé, pour véhicule automobile (11), comprenant au moins un agencement selon l'une des revendications précédentes.

11. Système selon la revendication 10,
**caractérisé en ce qu'**il comprend plusieurs unités de communication (25) qui sont reliées à une unité de commande commune (23).

12. Véhicule automobile comprenant un système de télécommande selon la revendication 10 ou 11.

13. Véhicule automobile selon la revendication 12,
**caractérisé en ce qu'**il est prévu plusieurs unités de communication (25) agencées de façon répartie dans le véhicule automobile (11), qui sont reliées à une unité de commande commune (23).
